# EUROPÄISCHE PATENTSCHRIFT

(11) **EP 1 866 051 B1**
(45) Veröffentlichungstag und Bekanntmachung des Hinweises auf die Patenterteilung: **11.06.2008**
(21) Anmeldenummer: 06742979.5
(22) Anmeldetag: 18.05.2006
(51) Int. Cl.: B01D 35/153, B01D 29/96

(54) **ÖLFILTERANORDNUNG**
OIL FILTER ARRANGEMENT
SYSTEME DE FILTRATION D'HUILE

(30) Priorität: 02.09.2005 DE 102005042714
(43) Veröffentlichungstag der Anmeldung: 19.12.2007
(73) Patentinhaber: Joma-Polytec Kunststofftechnik GmbH, 72411 Bodelshausen (DE)
(72) Erfinder: PFITZER, Friedhelm, 72414 Rangendingen (DE); MAUTE, Alexander, 72379 Hechingen-Stetten (DE); JUNGMANN, Peter, 72406 Bisingen (DE)
(74) Vertreter: Bulling, Alexander
(86) Internationale Anmeldenummer: PCT/EP2006/004716
(87) Internationale Veröffentlichungsnummer: WO 2007/028426

(56) Entgegenhaltungen:
- EP-A- 1 327 471
- EP-A- 1 623 749
- DE-A1- 10 353 424
- US-A1- 2005 150 825
- PATENT ABSTRACTS OF JAPAN Bd. 2003, Nr. 12, 5. Dezember 2003 (2003-12-05) & JP 2003 320206 A (TOYO ROKI MFG CO LTD), 11. November 2003 (2003-11-11)

## Beschreibung

Die Erfindung betrifft eine Ölfilteranordnung mit einem Gehäuse, das einen Aufnahmeraum für ein in das Gehäuse einsetzbares, radial mit Öl durchströmbares Filterelement aufweist, mit einem bei eingesetztem Filterelement das Filterelement tragenden Stützrohr, mit einem den Aufnahmeraum verschließenden Gehäusedeckel und mit einem im Bodenbereich des Aufnahmeraums vorgesehenen Drainagekanal. Das Vorsehen eines Drainagekanals hat den Vorteil, dass vor dem vollständigen Herausnehmen des Filterelements Öl, das im Aufnahmeraum vorhanden ist, abfließen kann. Dadurch ergibt sich eine vereinfachte Handhabung des Filterelements und der Filterelementwechsel wird vereinfacht.

Derartige Ölfilteranordnungen sind in vielfältiger Art und Weise bekannt.

Beispielsweise zeigt die DE 39 03 675 C2 eine Ölfilteranordnung, bei der an der dem Bodenbereich des Aufnahmeraums zugewandten Seite des Filterelements ein Verschlusszapfen zum Verschließen des Drainagekanals vorgesehen ist.

Bei der DE 102 35 902 A1 ist am Boden des Aufnahmeraums eine von einem Rohrstutzen umgebene Reinölöffnung angeordnet. Ferner ist am Boden eine Drainageöffnung vorgesehen, die über ein an einer Federspange vorgesehenes Verschlussteil verschließbar ist. Bei eingesetztem Filterelement wird das Verschlussteil über die Federspange in die Schließposition bewegt. Beim Herausnehmen des Filterelements wird aufgrund der Eigenspannung der Federspange der Drainagekanal geöffnet.

Aus der JP 2003 320206 A ist eine Ölfilteranordnung bekannt geworden, bei der beim Aufschrauben eines Deckels das Filterelement über einen Rotor mitverdreht wird, um eine ungewollte Verwindung des Filterelements zu vermeiden.

Der vorliegenden Erfindung liegt die Aufgabe zugrunde, einen derart bekannten Stand der Technik weiterzubilden. Insbesondere soll die Funktions- und Betriebssicherheit der Ölfilteranordnung erhöht werden.

Die Erfindung sieht dazu vor, dass das Stützrohr am Gehäuse befestigt ist und beim Austausch des Filterelements im Gehäuse verbleibt und dass im Bodenbereich des Aufnahmeraums eine auf dem Stützrohr wenigstens bedingt axial verschiebbar angeordnete Drainageplatte mit einem Verschlussmittel zum Verschließen des Drainagekanals angeordnet ist.

Aufgrund des Vorsehens der Drainageplatte kann beim Herausnehmen des Filterelements der Drainagekanal geöffnet werden, so dass vor vollständigem Herausnehmen des Filterelements das im Aufnahmeraum vorhandene Öl abfließen kann. Die Drainageplatte samt Verschlussmittel kann dabei aus einem vergleichsweise unnachgiebigen Material sein, wodurch hohe Kräfte zum Verschließen der Drainageplatte bereitgestellt werden können. Beim Stand der Technik gemäß der DE 102 35 902 A1 hängt die Verschlusskraft von der Elastizität der Federspange ab, da die Federspange vom Filterelement zum Schließen des Ablasskanals beaufschlagt wird.

Es kann erfindungsgemäß vorgesehen sein, dass beim Wechseln des Filterelements das zargenartige Stützrohr im Gehäuse verbleibt, wodurch die Handhabung vereinfacht wird. Ferner wird eine sichere Anordnung des Stützrohrs gewährleistet, bei der das Filterelement auf das Stützrohr aufgeschoben beziehungsweise vom Stützrohr abgezogen werden kann. Beim Filterelementwechsel wird der Deckel abgenommen und lediglich das Filterelement herausgenommen. Zum Verbleib des Stützrohrs im Gehäuse kann es insbesondere am Gehäuse verrastet, verschraubt und/oder bajonettartig und/oder unlösbar befestigt sein. Bei einer Verrastung sind entsprechende Rastmittel vorzusehen. Bei einer Verschraubung sind entsprechende Gewinde und/oder Schrauben vorzusehen. Bei einer bajonettartigen Befestigung wird das Stützrohr zunächst entlang seiner Längsachse in den Aufnahmeraum eingeführt und dann durch Verdrehen um seine Längsachse mittel entsprechend vorzusehenden Hinterscheidungsabschnitten festgesetzt.

Gemäß der Erfindung ist vorteilhaft, wenn zwischen der Drainageplatte und dem Boden wenigstens eine Druckfeder derart angeordnet ist, dass in der Betriebslage bei geschlossenem Gehäuse und eingesetztem Filterelement die Drainageplatte vom Filterelement entgegen der Federkraft beaufschlagt wird und das Verschlussmittel den Drainagekanal verschließt. Zusätzlich zu der auf dem Stützrohr verschiebbar angeordneten Drainageplatte ist folglich eine Druckfeder vorgesehen, die die Drainageplatte beaufschlagt. Aufgrund der Anordnung des Druckelements zwischen dem Boden des Aufnahmeraumes und der Drainageplatte ist es nicht zwingend erforderlich, dass sich die Druckfeder unmittelbar am Boden und/oder der Drainageplatte abstützt. Vielmehr kann eine Abstützung auch an gehäuseseitigen und/oder an drainageplattenseitigen Bauteilen erfolgen.

Erfindungsgemäß ist ferner vorteilhaft, wenn die Drainageplatte beim Öffnen des Gehäusedeckels von der Druckfeder aus der Betriebslage in eine Ablasslage gedrückt wird, in der der Drainagekanal geöffnet ist. Die Druckfeder ist dabei vorteilhafterweise derart ausgelegt, dass beim Öffnen des Gehäusedeckels die Drainageplatte samt Filterelement angehoben wird. Das Öffnen des Drainagekanals erfolgt dabei selbsttätig und das Filterelement wird aufgrund der entsprechend hohen Federkraft der Druckfeder angehoben. Dadurch wird ein Herausnehmen des Filterelements aus dem Aufnahmeraum wesentlich vereinfacht; das Filterelement kann dabei beispielsweise geringfügig aus dem Aufnahmeraum herausragen und kann folglich leichter entnommen werden.

Die Drainageplatte kann dabei vorteilhafterweise ringscheibenartig ausgebildet sein, wobei sie einen zentralen Durchbruch aufweist, in dem das Stützrohr angeordnet ist. Vorteilhafterweise verläuft dabei die Ebene, in der die Drainageplatte liegt, wenigstens weitgehend senkrecht zur Mittellängsachse des Stützrohrs. Die Drainageplatte wird dabei vorteilhafterweise parallel zum Boden des Aufnahmeraums beziehungsweise senkrecht zur Mittellängsachse des Stützrohrs verschoben, wodurch ein sicheres Einführen beziehungsweise Schließen der Drainageöffnung durch das Verschlussmittel erreicht werden kann. Ferner wird ein Verkanten der Drainageplatte am Stützrohr unterbunden.

Insgesamt kann die Drainageplatte eine kreisrunde, ovale, eiförmige oder eine anders ausgebildete Kontur aufweisen.

An der Drainageplatte können ferner Stege zur Abstützung und/oder Führung am Boden des Aufnahmeraums und/oder am Stützrohr und/oder am Filterelement vorhanden sein. Hierdurch kann ein definiertes Beaufschlagen der Drainageplatte durch das Filterelement und/oder eine gezielte Führung der Bewegung der Drainageplatte erreicht werden. Durch Vorsehen von Stegen am Boden können definierte Anschläge für die Drainageplatte gegenüber dem Gehäuse bereitgestellt werden.

Zur Führung der Drainageplatte am Rohrstutzen ist beispielsweise denkbar, dass sich in axialer Richtung erstreckende Längsnutenabschnitte am Stützrohr vorgesehen sind, wobei die Drainageplatte dann nach radial innen ragende, in die Längsnuten eingreifende Überstände aufweist. Zur Begrenzung des Bewegungsspielraums der Drainageplatte nach axial oben können dabei die Längsnutenabschnitte nur eine entsprechend definierte Länge aufweisen. Durch Anschlagen der Überstände an den Enden der Längsnutenabschnitte wird der Bewegungsspielraum der Drainageplatte dann begrenzt.

Gemäß einer weiteren vorteilhaften Ausgestaltung der Erfindung kann vorgesehen sein, dass das Stützrohr in nach radial außen gewandter Richtung abstehende Füße oder einen in nach radial außen gewandter Richtung abstehenden und wenigstens abschnittsweise umlaufenden Kragen aufweist. Die Füße und/oder der Kragen sind dabei vorteilhafterweise auf der dem Boden zugewandten Seite des Stützrohrs vorgesehen.

Das Stützrohr ist dabei vorteilhafterweise an den Füßen oder am Kragen am Gehäuse befestigt. Insbesondere kann das Stützrohr an den Füßen oder am Kragen mit dem Gehäuse verrastet, verschraubt, vernietet und/oder in sonstiger Weise dauerhaft befestigt sein.

Gemäß einer weiteren vorteilhaften Ausgestaltung der Erfindung ist denkbar, dass sich an den Füßen oder am Kragen die Druckfeder abstützt, die gegen die Drainageplatte wirkt.

Die Druckfeder ist auch bei dieser Ausführungsform zwischen der Drainageplatte und dem Boden angeordnet. Bei dieser Ausführungsform ist vorteilhaft, dass die Geometrie des Bodens 20 unabhängig von der Druckfeder ausgebildet sein kann, da sich die Druckfeder nicht am Boden, sondern an den Füßen oder am Kragen abstützt.

Das Verschlussmittel als solches kann insbesondere exzentrisch zur Mittellängsachse des Stützrohrs an der Drainageplatte in axialer Richtung, zum Drainagekanal hin, abstehend ausgebildet sein. Das Verschlussmittel kann dabei als Verschlusszapfen an die Drainageplatte angeformt sein. Das Verschlussmittel kann auch als wenigstens abschnittsweise um die Mittellängsachse umlaufender Dichtmittelring an der Drainageplatte vorgesehen sein. Denkbar ist ebenfalls, dass an der Drainageplatte lediglich auf der dem Boden zugewandten Seite eine Dichtmittelanhäufung vorgesehen ist, die in der Betriebslage den Drainagekanal verschließt.

Das Verschlussmittel kann vorteilhafterweise einen sich in axialer Richtung erstreckenden Stegabschnitt und einen Verschlussabschnitt zum Verschließen des Drainagekanals aufweisen. Der Stegabschnitt dient dabei zur Bauraumüberbrückung von der Drainageplatte hin zum Drainagekanal. Der Verschlussabschnitt, der zum Verschließen des Drainagekanals dient, kann eine entsprechende Dichtung umfassen.

Für den Fall, dass das Stützrohr ein nach radial außen abragenden Kragen aufweist, kann vorgesehen sein, dass der Kragen in dem axial über dem Drainagekanal gelegenen Bereich eine Aussparung aufweist, welche vom Verschlussmittel durchgriffen wird. Hierdurch kann trotz Vorsehen eines Kragens am Stützrohr gewährleistet werden, dass das Verschlussmittel den Drainagekanal erreichen kann.

Dabei kann vorteilhafterweise vorgesehen sein, dass die Aussparung im Kragen einen ersten Teilabschnitt derart aufweist, dass die Querschnittsfläche dieses Teilabschnitts größer ist als die Querschnittsfläche des Verschlussabschnitts, so dass das Verschlussmittel in diesen Teilabschnitt in axialer Richtung einführbar ist. Bei der Montage der Ölfilteranordnung kann der Verschlussabschnitt folglich in axialer Richtung in den ersten Teilabschnitt der Aussparung eingesteckt werden.

Gemäß einer Weiterbildung der Erfindung sieht die Aussparung einen zweiten Teilabschnitt derart vor, dass nach achsparalleler Verlagerung des Stegabschnitts vom ersten Teilabschnitt in den zweiten Teilabschnitt, dessen Querschnittsfläche kleiner ist als die Querschnittsfläche des Verschlussabschnitts, so dass das Verschlussmittel in axialer Richtung aus der Aussparung nicht entnommen werden kann.

Bei der Montage der Ölfilteranordnung kann folglich die Drainageplatte samt Verschlussmittel um ihre Längsachse derart verdreht werden, dass der Stegabschnitt aus dem ersten Teilabschnitt der Aussparung in den zweiten Teilabschnitt der Aussparung gelangt. Da der zweite Teilabschnitt der Aussparung kleiner ist als die Querschnittsfläche des Verschlussmittels, ist ein axiales Herausführen des Verschlussmittels aus der Aussparung nicht mehr möglich. Dadurch wird in der Endmontagelage der Bewegungsspielraum der Drainageplatte nach axial oben begrenzt. Die Drainageplatte wird folglich in axialer Richtung dadurch gesichert.

Um ein Verkanten des Stegabschnitts in der Aussparung möglichst weitgehend zu verhindern, kann vorgesehen sein, dass die Ölfilteranordnung ein den Stegabschnitt umgebendes Federelement aufweist, das sich einerseits an der Drainageplatte und anderseits am Kragen des Stützrohrs abstützt. Zusammen mit der Druckfeder wird beim Herausnehmen des Filterelements ein funktionssicheres Bewegen der Drainageplatte gewährleistet.

Eine vorteilhafte Ausführungsform der Erfindung ergibt sich auch dann, wenn das Stützrohr im Bereich des Bodens des Aufnahmeraums ein in radialer Richtung geschlossenes zum Stützrohr radial beabstandetes Staurohr umgibt. Beim Einsetzen des Stützrohrs kann dieses beispielsweise auf das Staurohr aufgesetzt werden. Das Staurohr dient dann zusätzlich als Fügehilfe.

Gemäß einer Weiterbildung der Erfindung kann ferner vorgesehen sein, dass an der dem Boden des Aufnahmeraums abgewandten freien Seite des Stützrohrs ein Überdruck-Umgehungs-Ventil angeordnet ist. Ein derartiges Ventil öffnet dann, wenn ein Grenzdruck überschritten wird, beispielsweise aufgrund eines sich mit Verschmutzungen zusetzenden Filterelements.

Weitere Einzelheiten und vorteilhafte Ausgestaltungen der Erfindung sind der nachfolgenden Beschreibung zu entnehmen, in der die Erfindung anhand der in der Zeichnung dargestellten Ausführungsformen der Erfindung näher beschrieben und erläutert ist.

Es zeigen:
- Figur 1: einen Längsschnitt durch eine erste Ausführungsform einer erfindungsgemäßen Ölfilteranordnung;
- Figur 2: einen Längsschnitt durch den Bodenbereich eines Aufnahmeraums einer zweiten Ausführungsform der Erfindung;Figur 3 eine Detailansicht aus Figur 2;
- Figur 4: das Stützrohr samt Kragen und Drainageplatte gemäß der Ausführungsform nach Figur 2 und 3; und
- Figur 5: eine Draufsicht auf den Kragen des Stützrohrs gemäß Figur 4.

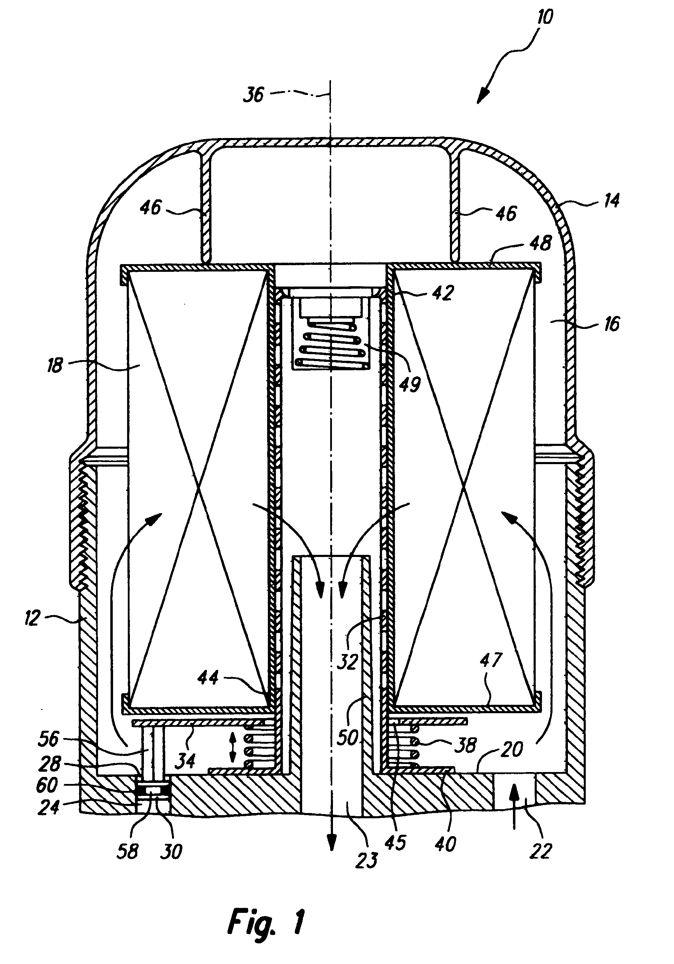

Die in der Figur 1 dargestellte Ölfilteranordnung 10 weist ein Gehäuse 12 und einen auf das Gehäuse 12 aufsetzbaren und über ein Gewinde 15 auf das Gehäuse 12 aufschraubbaren Gehäusedeckel 14 auf. Das Gehäuse 12 sieht einen Aufnahmeraum 16 vor, in dem ein radial von außen nach innen durchströmbares Filterelement 18 angeordnet ist.

Am Boden 20 des Aufnahmeraums 16 ist eine Rohölöffnung 22 vorgesehen, durch die zu filterndes Rohöl in den Aufnahmeraum 16 einfließt. Ferner ist am Boden 20 ein Drainagekanal 24 vorgesehen, über den im Aufnahmeraum 16 vorhandenes Öl bei Öffnen des Gehäusedeckels 14 bzw. bei Herausnahmen des Filterelements 18 abfließen kann. Der Drainagekanal 24 sieht dabei eine Drainageöffnung 28 vor. Ferner ist ein Reinölkanal 23 vorgesehen, über den gefiltertes Öl abfließen kann.

In der in der Figur 1 dargestellten Betriebslage der Filteranordnung 10 mit geschlossenem Gehäuse und eingesetztem Filterelement 18 ist die Drainageöffnung 28 von einem Verschlussmittel 30 verschlossen.

Das zapfenartige Verschlussmittel 30 ist seinerseits an einer im Bodenbereich 20 des Aufnahmeraums 16 auf einem Stützrohr 32 axial verschiebbaren Drainageplatte 34 angeordnet. In der Betriebslage ist das Filterelement 18 auf das zagenartig ausgebildete Stützrohr 32 aufgesteckt. Das Filterelement 18 liegt in seinem oberen radial inneren Bereich 42 dicht am oberen, dem Deckel 14 zugewandten Ende des Stützrohrs 32 an. Entsprechend liegt der dem Boden 12 zugewandte, radial innere Bereich 44 des Filterelements dicht am Stützrohr 32 an. Die Drainageplatte 34 weist einen zentralen Durchbruch 45 auf, über den sie auf das Stützrohr 32 aufgesteckt ist. Die Drainageplatte ist dabei in Richtung der Mittellängsachse 36 der Filteranordnung verschiebbar. Das zapfenartig ausgebildete Verschlussmittel 30 greift dabei in die Drainageöffnung 28, wobei sich der Drainagekanal 24 im Bereich der Drainageöffnung 28 parallel zur Mittellängsachse 36 erstreckt. Dadurch kann gewährleistet werden, dass unabhängig von der Eingriffstiefe des Verschlussmittels 30 in den Drainagekanal 24 ein sicheres Verschließen des Drainagekanals 24 erreicht werden kann.

Die Drainageplatte 34 wird von einer Druckfeder 38 nach oben in Richtung des Gehäusedeckels 14 druckbeaufschlagt. Die Druckfeder 38 stützt sich einerseits an der Drainageplatte 34 und andererseits an einem am Boden 20 befestigten, nach radial außen weisenden Kragen 40 des Stützrohrs 32 ab.

Das Stützrohr 32 ist dabei derart am Gehäuse 12 befestigt, dass es beim Austausch des Filterelements 18 im Gehäuse 12 verbleibt. Beispielsweise kann das Stützrohr 32 am Gehäuse 12 verrastet, verschraubt, vernietet und/oder verschweißt angeordnet sein.

Aufgrund der Federbeaufschlagung der Drainageplatte 34 wird beim Abnehmen des Gehausedeckels 14 die Drainageplatte nach axial oben bewegt, wodurch das Verschlussmittel 30 die Drainageöffnung 28 freigibt und das im Aufnahmeraum 16 vorhandene Öl über den Drainagekanal 24 abfließen kann. Die Druckfeder 38 ist dabei derart ausgelegt, dass beim Abnehmen des Gehäusedeckels 14 nicht nur die Drainageplatte 34 angehoben wird, sondern auch das Filterelement 18 nach axial oben bewegt wird. Hierdurch wird ein Herausnehmen des Filterelements 18 aus dem Aufnahmeraum 16 erleichtert.

Um in der Betriebslage die untere Endseite 47 des Filterelements 18 gegen die Federkraft der Druckfeder 38 zu beaufschlagen, sind am Deckel 14 Rippen 46 vorgesehen, die gegen die obere Endseite 48 des Filterelements 18 wirken. Am freien Ende des Stützrohrs 32 ein Bypassventil 49 vorgesehen, dass bei stark verschmutztem oder zugesetztem Filterelement 18 aufgrund eines Druckanstiegs öffnet.

Das Stützrohr 32 umgibt im Bereich des Bodens 20 ein zum Stützrohr radial beabstandetes, den Reinölkanal 23 bildendes Staurohr 50.

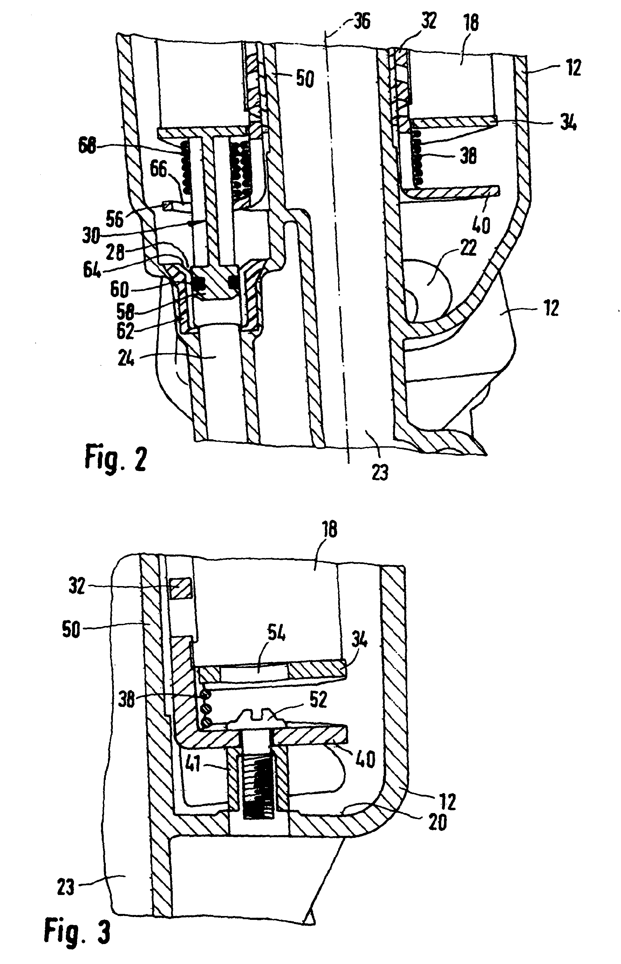

Die in den Figuren 2 bis 5 dargestellte Ausführungsform der Erfindung entspricht im Wesentlichen der Anordnung gemäß Figur 1. In den Figuren 2 bis 5 sind die den der Figur 1 entsprechenden Bauteile mit entsprechenden Bezugszeichen gekennzeichnet.

Das Stützrohr 32 sieht auch hier einen nach radial außen ragenden Kragen 40 vor, über den das Stützrohr 32 dauerhaft am Gehäuse 12 befestigt ist. Wie aus Figur 3 deutlich wird, kann das Stützrohrs mittels Schrauben 52 am Gehäuse 12 befestigt sein. Dazu können am Gehäuse 12 und/oder am Stützrohr 32 entsprechende Befestigungszapfen 41 vorgesehen sein. Entsprechend kann das Stützrohr 32 beispielsweise durch Heißvernieten im Bereich des Kragens 40 am Gehäuse 12 unlösbar befestigt werden.

Um den Schraubenkopf der Schraube 50 von axial oben erreichen zu können, sieht die Drainageplatte 34 oberhalb der Schrauben 52 Durchbrüche 54 vor.

Der Schnitt in Figur 2 ist so gewählt, dass das Verschlussmittel 30 deutlich sichtbar ist. Das exzentrisch zur Mittellängsachse 36 verlaufend angeordnete Verschlussmittel 30 umfasst einen sich in axialer Richtung erstreckenden Stegabschnitt 56 und einen Verschlussabschnitt 58 zum Verschließen des Drainagekanals 24. Der Verschlussabschnitt 58 umfasst zudem ein Dichtmittel in Form eines Dichtrings 60. Der Verschlussabschnitt 58 greift dabei in der in der Figur 2 dargestellten Betriebslage in den Drainagekanal 24 ein, wobei im Bereich der Drainagekanalöffnung 28 ein Dichtungseinsatz 62 am Gehäuse 12 angeordnet ist. Der hülsenartige Dichtungseinsatz 62 weist dabei auf seiner dem Innenraum 16 zugewandten Seite Einführschrägen 64 für den Verschlussabschnitt 58 auf.

Wie ebenfalls aus Figur 2 deutlich wird, weist der Kragen 40 des Stützrohrs 32 im Bereich axial oberhalb der Drainageöffnung 28 eine Aussparung 66 auf, durch die das Verschlussmittel 30, beziehungsweise der Stegabschnitt 56, hindurchragt. Um den Stegabschnitt 56 ist ein Federelement 68 angeordnet, das sich einerseits an der Drainageplatte 34 und andererseits an dem die Aussparung 66 umgebenden Bereich des Kragens 40 abstützt. Beim Öffnen des Deckels 14 wird folglich bei der Ausführungsform gemäß Figur 2 die Drainageplatte 34 aufgrund der Druckfeder 38 und aufgrund des Federelements 68 angehoben.

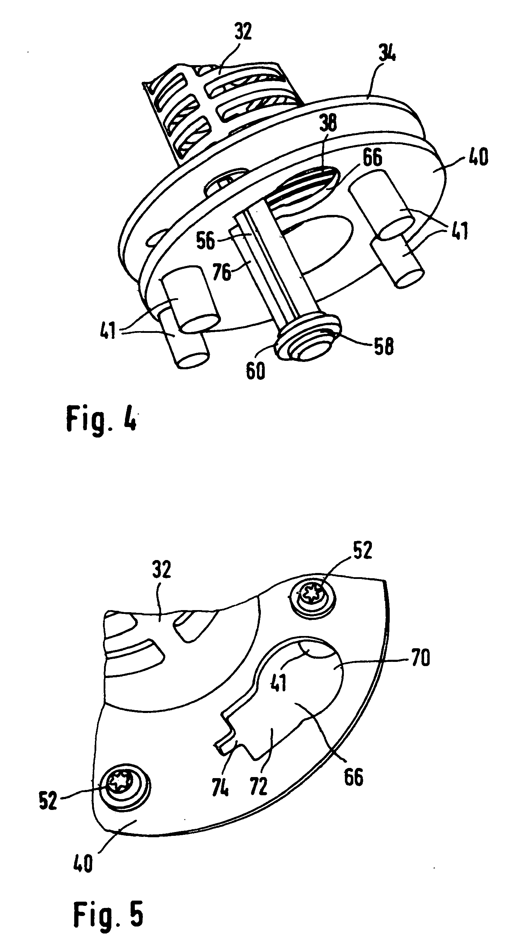

Aus den Figuren 4 und 5 wird deutlich, dass die Aussparung 66 zwei Teilabschnitte 70 und 72 aufweist.

Der erste Teilabschnitt 70 weist dabei einen kreisrunden Durchmesser auf, dessen Fläche geringfügig größer ist als die Querschnittsfläche des Verschlussabschnitts 58. Damit kann der Verschlussabschnitt 58 in axialer Richtung in den Teilabschnitt 70 der Aussparung 66 eingeführt werden.

Wie aus den Figuren 2 und 4 deutlich wird, weist der Stegabschnitt 56 im Querschnitt eine kreuzrippenartige Kontur auf. Aus Figur 5 wird deutlich, dass der zweite Teilabschnitt 72 auf seiner dem Teilabschnitt 70 abgewandten Seite eine zur Kreuzrippenkontur des Stegabschnitts 56 komplementäre Kreuzkontur 74 aufweist.

Der Stegabschnitt 56 kann vom Teilabschnitt 70 in einer Vormontageposition in den Teilabschnitt 72 in eine Endmontageposition verbracht werden. Die dem Teilabschnitt 70 abgewandte Rippe 76 des Stegabschnitts 56 gelangt dann in die Kreuzkontur 74 des Teilabschnitts 72. Hierdurch wird eine Bewegungsbegrenzung der Drainageplatte 34 in axialer Richtung erreicht. Dadurch kann die Drainageplatte 34 verliersicher am Stützrohr 32 angeordnet werden, wobei das Stützrohr 32, die Drainageplatte 34 sowie die Federn 38 und 68 eine separat handhabbare Vormontagegruppe bilden. Diese Vormontagegruppe kann bei der Fertigung der Ölfilteranordnung 10 in den Aufnahmeraum 16 eingesetzt werden. Danach kann das Stützrohr 32 mittels den Schrauben 52, oder auf andere Art und Weise, endgültig im Gehäuse 12 festgesetzt werden.

## Patentansprüche

1. Ölfilteranordnung (10) mit einem Gehäuse (12), das einen Aufnahmeraum (16) für ein in das Gehäuse (12) einsetzbares, radial mit Öl durchströmbares Filterelement (18) aufweist, mit einem bei eingesetztem Filterelement (18) das Filterelement (18) tragenden, beim Austausch des Filterelements (18) im Gehäuse (12) verbleibenden Stützrohr (32), mit einem den Aufnahmeraum (16) verschließenden Gehäusedeckel (14), und mit einem im Bodenbereich (20) des Aufnahmeraums (16) vorgesehenen Drainagekanal (24), wobei im Bodenbereich (20) des Aufnahmeraums (16) eine vom Filterelement (18) und vom Stützrohr (32) separat ausgebildete und auf dem Stützrohr (32) wenigstens bedingt axial verschiebbar angeordnete Drainageplatte (34) mit einem Verschlussmittel (30) zum Verschließen des Drainagekanals (24) angeordnet ist.

2. Ölfilteranordnung (10) nach Anspruch 1, **dadurch gekennzeichnet, dass** das Stützrohr (32) am Gehäuse (12) befestigt ist.

3. Ölfilteranordnung (10) nach Anspruch 1 oder 2, **dadurch gekennzeichnet, dass** zwischen der Drainageplatte (34) und dem Bodenbereich (20) wenigstens eine Druckfeder (38) derart angeordnet ist, dass in der Betriebslage bei geschlossenem Gehäuse und eingesetztem Filterelement (18) die Drainageplatte (34) vom Filterelement (18) entgegen der Federkraft beaufschlagt wird und das Verschlussmittel (30) den Drainagekanal (24) verschließt.

4. Ölfilteranordnung (10) nach Anspruch 3, **dadurch gekennzeichnet, dass** die Drainageplatte (34) beim Öffnen des Gehäusedeckels (14) von der Druckfeder (38) aus der Betriebslage in eine Ablasslage gedrückt wird, in der der Drainagekanal (24) geöffnet ist.

5. Ölfilteranordnung (10) nach einem der vorhergehenden Ansprüche, **dadurch gekennzeichnet, dass** die Drainageplatte (34) ringscheibenartig ausgebildet ist.

6. Ölfilteranordnung (10) nach einem der vorhergehenden Ansprüche, **dadurch gekennzeichnet, dass** das Stützrohr (32) in nach radial außen gewandter Richtung abstehende Füße oder einen in nach radial außen gewandter Richtung abstehenden und wenigstens abschnittsweise umlaufenden Kragen (40) aufweist.

7. Ölfilteranordnung (10, 60) nach Anspruch 6, **dadurch gekennzeichnet, dass** das Stützrohr (32) an den Füßen oder am Kragen (40) am Gehäuse (12) befestigt ist.

8. Ölfilteranordnung (10) nach Anspruch 6 oder 7, **dadurch gekennzeichnet, dass** sich die Druckfeder (38) auf den Füßen oder dem Kragen (40) abstützt.

9. Ölfilteranordnung (10) nach einem der vorhergehenden Ansprüche, **dadurch gekennzeichnet, dass** das Verschlussmittel (30) exzentrisch zur Mittellängsachse (36) des Stützrohrs (32) in axialer Richtung abstehend ausgebildet ist.

10. Ölfilteranordnung (10) nach Anspruch 9, **dadurch gekennzeichnet, dass** das Verschlussmittel (30) einen sich in axialer Richtung erstreckenden Stegabschnitt (56) und einen Verschlussabschnitt (58) zum Verschließen des Drainagekanals aufweist.

11. Ölfilteranordnung (10) nach einem der Ansprüche 6 bis 10, **dadurch gekennzeichnet, dass** der Kragen (40) in dem axial über dem Drainagekanal (24) gelegenen Bereich eine Aussparung (66) aufweist, welche vom Verschlussmittel (30) durchgriffen wird.

12. Ölfilteranordnung (10) nach Anspruch 11, **dadurch gekennzeichnet, dass** die Aussparung (66) einen ersten Teilabschnitte (70) derart aufweist, dass die Querschnittsfläche dieses Teilabschnitts (70) größer ist als die Querschnittsfläche des Verschlussabschnitts (58), so dass das Verschlussmittel (30) in diesen Teilabschnitt (70) in axialer Richtung einführbar ist.

13. Ölfilteranordnung (10) nach Anspruch 11 oder 12, **dadurch gekennzeichnet, dass** die Aussparung (66) einen zweiten Teilabschnitt (72) derart aufweist, dass nach achsparalleler Verlagerung des Stegabschnitts (56) vom ersten Teilabschnitt (70) in den zweiten Teilabschnitt (72), dessen Querschnittsfläche kleiner ist als die Querschnittsfläche des Verschlussabschnitts (58), das Verschlussmittel (30) in axialer Richtung aus der Aussparung (66) nicht entnommen werden kann.

14. Ölfilteranordnung (10) nach Anspruch 13, **dadurch gekennzeichnet, dass** der zweite Teilabschnitt (72) der Aussparung (66) eine zu der Kontur (76) des Querschnitts des Stegabschnitts (56) wenigstens abschnittweise komplementäre Kontur (74) aufweist.

15. Ölfilteranordnung (10) nach einem der Ansprüche 10 bis 14, **dadurch gekennzeichnet, dass** ein den Stegabschnitt (56) umgebendes Federelement (68) vorgesehen ist, das sich einerseits an der Drainageplatte (34) und andererseits am Kragen (40) des Stützrohrs abstützt.

16. Ölfilteranordnung (10) nach einem der Ansprüche 10 bis 15, **dadurch gekennzeichnet, dass** das Stützrohr (32) im Bereich des Bodens (20) des Aufnahmeraums (16) ein in radialer Richtung geschlossenes, zum Stützrohr (32) radial beabstandetes Staurohr (50) umgibt.

## Claims

1. Oil filter arrangement (10) comprising a housing (12) which has a receiving chamber (16) for a filter element (18) which can be inserted into the housing (12) and through which oil can flow radially, comprising a support tube (32) which supports the filter element (18) when filter element (18) is inserted and remains in the housing (12) when the filter element (18) is replaced, comprising a housing cover (14) which closes the receiving chamber (16), and comprising a drainage channel (24) provided in the base region (20) of the receiving chamber (16), a drainage plate (34) formed separately from the filter element (18) and from the support tube (32) and arranged on the support tube (32) so as to be axially displaceable at least to a limited extent and having a closing means (30) for closing the drainage channel (24) being arranged in the base region (20) of the receiving chamber (16).

2. Oil filter arrangement (10) according to Claim 1, **characterized in that** the support tube (32) is fixed to the housing (12).

3. Oil filter arrangement (10) according to Claim 1 or 2, **characterized in that** at least one pressure spring (38) is arranged between the drainage plate (34) and the base region (20) in such a way that, in the operating position with closed housing and inserted filter element (18), the filter element (18) presses against the drainage plate (34) against the spring force, and the closing means (30) closes the drainage channel (24).

4. Oil filter arrangement (10) according to Claim 3, **characterized in that** on opening the housing cover (14), the drainage plate (34) is pressed by the pressure spring (38) from the operating position into a discharge position in which the drainage channel (24) is opened.

5. Oil filter arrangement (10) according to any of the preceding claims, **characterized in that** the drainage plate (34) is in the form of an annular disc.

6. Oil filter arrangement (10) according to any of the preceding claims, **characterized in that** the support tube (32) has feet projecting in a direction facing radially outwards or a collar (40) projecting in a direction facing radially outwards and running all round at least in sections.

7. Oil filter arrangement (10, 60) according to Claim 6, **characterized in that** the support tube (32) is fixed at the feet or collar (40) to the housing (12).

8. Oil filter arrangement (10) according to Claim 6 or 7, **characterized in that** the pressure spring (38) is supported on the feet or on the collar (40).

9. Oil filter arrangement (10) according to any of the preceding claims, **characterized in that** the closing means (30) is formed eccentrically with respect to the central longitudinal axis (36) of the support tube (32) so as to project in the axial direction.

10. Oil filter arrangement (10) according to Claim 9, **characterized in that** the closing means (30) has a web section (56) extending in the axial direction and a closing section (58) for closing the drainage channel.

11. Oil filter arrangement (10) according to any of Claims 6 to 10, **characterized in that** the collar (40) has, in the region located axially above the drainage channel (24), a cut-out (66) through which the closing means (30) passes.

12. Oil filter arrangement (10) according to Claim 11, **characterized in that** the cut-out (66) has a first partial section (70) so that the cross-sectional area of the partial section (70) is greater than the cross-sectional area of the closing section (58), so that the closing means (30) can be inserted into this partial section (70) in the axial direction.

13. Oil filter arrangement (10) according to Claim 11 or 12, **characterized in that** the cut-out (66) has a second partial section (72) so that, after displacement of the web section (56) parallel to the axis from the first partial section (70) into the second partial section (72), the cross-sectional area of which is smaller than the cross-sectional area of the closing section (58), the closing means (30) cannot be removed from the cut-out (66) in the axial direction.

14. Oil filter arrangement (10) according to Claim 13, **characterized in that** the second partial section (72) of the cut-out (66) has a contour (74) complementary at least in sections to the contour (76) of the cross-section of the web section (56).

15. Oil filter arrangement (10) according to any of Claims 10 to 14, **characterized in that** a spring element (68) which surrounds the web section (56) and is supported firstly on the drainage plate (34) and secondly on the collar (40) of the support tube is provided.

16. Oil filter arrangement (10) according to any of Claims 10 to 15, **characterized in that**, in the region of the base (20) of the receiving chamber (16), the support tube (32) surrounds a pressure tube (50) which is closed in the radial direction and is radially a distance away from the support tube (32).

## Revendications

1. Ensemble de filtre à huile (10), avec un carter (12) qui présente un logement (16) pour un élément filtrant (18) pouvant être inséré dans le carter (12) et traversé radialement par l'huile, avec un tube support (32) qui supporte l'élément filtrant (18) quand celui-ci est inséré et qui reste dans le carter (12) lorsque l'élément filtrant (18) est remplacé, avec un couvercle de carter (14) fermant le logement (16), et avec un canal de drainage (24) prévu dans la partie de fond (20) du logement (16), dans lequel, dans la partie de fond (20) du logement (16), une plaque de drainage (34) réalisée séparément de l'élément filtrant (18) et du tube support (32) et disposée sur le tube support (32) de façon au moins partiellement axialement mobile est disposée avec un moyen de fermeture (30) pour fermer le canal de drainage (24).

2. Ensemble de filtre à huile (10) selon la revendication 1, **caractérisé en ce que** le tube support (32) est fixé au carter (12).

3. Ensemble de filtre à huile (10) selon la revendication 1 ou 2, **caractérisé en ce qu'**entre la plaque de drainage (34) et la partie de fond (20), au moins un ressort de pression (38) est disposé de telle sorte que dans la position opérationnelle, lorsque le carter est fermé et l'élément filtrant (18) est inséré, la plaque de drainage (34) est sollicitée par l'élément filtrant (18) contre la force de ressort et le moyen de fermeture (30) ferme le canal de drainage (24).

4. Ensemble de filtre à huile (10) selon la revendication 3, **caractérisé en ce qu'**à l'ouverture du couvercle de carter (14), la plaque de drainage (34) est poussée par le ressort de pression (38) de la position opérationnelle vers une position de décharge dans laquelle le canal de drainage (24) est ouvert.

5. Ensemble de filtre à huile (10) selon l'une quelconque des revendications précédentes, **caractérisé en ce que** la plaque de drainage (34) est réalisée à la manière d'un disque annulaire.

6. Ensemble de filtre à huile (10) selon l'une quelconque des revendications précédentes, **caractérisé en ce que** le tube support (32) présente des montants dépassant dans la direction tournée radialement vers l'extérieur ou bien une collerette (40) qui dépasse dans la direction tournée radialement vers l'extérieur et est périphérique au moins par sections.

7. Ensemble de filtre à huile (10, 60) selon la revendication 6, **caractérisé en ce que** le tube support (32) est fixé au carter (12) au niveau des montants ou de la collerette (40).

8. Ensemble de filtre à huile (10) selon la revendication 6 ou 7, **caractérisé en ce que** le ressort de pression (38) prend appui sur les montants ou la collerette (40).

9. Ensemble de filtre à huile (10) selon l'une quelconque des revendications précédentes, **caractérisé en ce que** le moyen de fermeture (30) est réalisé de façon décentrée par rapport à l'axe longitudinal central (36) du tube support (32) en dépassant dans la direction axiale.

10. Ensemble de filtre à huile (10) selon la revendication 9, **caractérisé en ce que** le moyen de fermeture (30) présente une section de nervure (56) s'étendant dans la direction axiale et une section de fermeture (58) pour fermer le canal de drainage.

11. Ensemble de filtre à huile (10) selon l'une quelconque des revendications 6 à 10, **caractérisé en ce que** la collerette (40) présente dans la partie située axialement au-dessus du canal de drainage (24) un évidement (66) qui est traversé par le moyen de fermeture (30).

12. Ensemble de filtre à huile (10) selon la revendication 11, **caractérisé en ce que** l'évidement (66) présente une première section partielle (70) de telle sorte que la superficie de la section de cette section partielle (70) est supérieure à la superficie de la section de la section de fermeture (58) de sorte que le moyen de fermeture (30) peut être introduit dans cette section partielle (70) dans la direction axiale.

13. Ensemble de filtre à huile (10) selon la revendication 11 ou 12, **caractérisé en ce que** l'évidement (66) présente une deuxième section partielle (72) de telle sorte qu'après un décalage parallèle à l'axe de la section de nervure (56) depuis la première section partielle (70) dans la deuxième section partielle (72), dont la superficie de la section est inférieure à la superficie de la section de la section de fermeture (58), le moyen de fermeture (30) ne peut pas être retiré de l'évidement (66) dans la direction axiale.

14. Ensemble de filtre à huile (10) selon la revendication 13, **caractérisé en ce que** la deuxième section partielle (72) de l'évidement (66) présente un contour (74) complémentaire au moins par sections au contour (76) de la section transversale de la section de nervure (56).

15. Ensemble de filtre à huile (10) selon l'une quelconque des revendications 10 à 14, **caractérisé en ce qu'**un élément de ressort (68) entourant la section de nervure (56) est prévu qui prend appui d'une part sur la plaque de drainage (34) et d'autre part sur la collerette (40) du tube support.

16. Ensemble de filtre à huile (10) selon l'une quelconque des revendications 10 à 15, **caractérisé en ce que** dans la zone du fond (20) du logement (16), le tube support (32) entoure un venturi (50) fermé dans la direction radiale et espacé radialement par rapport au tube support (32).
